(19) Europäisches Patentamt
European Patent Office
Office européen des brevets

(11) **EP 3 203 305 A1**

(12) **DEMANDE DE BREVET EUROPEEN**

(43) Date de publication:
09.08.2017 Bulletin 2017/32

(51) Int Cl.:
*G02B 27/09* (2006.01) *F21S 8/10* (2006.01)

(21) Numéro de dépôt: **17151482.1**

(22) Date de dépôt: **13.01.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **02.02.2016 FR 1650800**

(71) Demandeur: **Valeo Vision**
**93012 Bobigny Cedex (FR)**

(72) Inventeur: **ALBOU, Pierre**
**75013 PARIS (FR)**

(54) **OPTIQUE DE COLLIMATION SIMPLE POUR SOURCE LUMINEUSE COHÉRENTE**

(57) L'invention porte sur un module lumineux, comprenant au moins une source lumineuse apte à générer un faisceau lumineux suivant un axe optique, ledit faisceau lumineux présentant un axe lent de divergence et un axe rapide de divergence, ces trois axes étant perpendiculaires deux à deux au moins un élément de conversion de lumière, au moins un système de balayage agencé pour balayer la surface dudit élément de conversion de lumière avec le faisceau lumineux, une optique de focalisation agencée entre la source lumineuse et le système de balayage pour focaliser le faisceau lumineux sur l'élément de conversion en adaptant la taille et la forme dudit faisceau lumineux aux dimensions dudit système de balayage, l'optique de focalisation formant objectif avec un grandissement différent selon un plan contenant ledit axe optique et ledit axe lent et selon un plan contenant l'axe optique et l'axe rapide.

Fig. 1

EP 3 203 305 A1

**Description**

La présente invention concerne le domaine technique des dispositifs lumineux pour véhicule automobile. Plus particulièrement, l'invention concerne un module optique pour dispositif lumineux pour véhicule automobile.

Un véhicule automobile comprend généralement plusieurs dispositifs lumineux, notamment des projecteurs avant et des feux arrières, constituant des moyens d'éclairage et/ou de signalisation remplissant des fonctions diverses telles que feu de route, feu de croisement, lampe ville, feu diurne, indicateur de direction, feu stop, feu de recul,... Ces fonctions sont notamment remplies grâce à l'émission d'un faisceau lumineux dont les propriétés varient d'une fonction à l'autre.

Lorsque le faisceau lumineux doit présenter une forte intensité lumineuse, il est connu d'utiliser une source de lumière de haute luminance, par exemple un laser. Il est alors nécessaire de modifier le spectre électromagnétique du faisceau lumineux issu de la source par des moyens de conversion de longueur d'onde connus en soi. Il est également nécessaire de collimater ce faisceau de manière à former un spot lumineux de forme et de taille prédéterminée sur une cible formée par lesdits moyens de conversion, grâce à un système de balayage destiné à balayer une tache lumineuse, formée sur cet organe, sur les moyens de conversion de longueur d'onde. On réalise ainsi un faisceau lumineux sortant du dispositif après mise en forme par une optique de mise en forme ayant la forme souhaitée. Or, ces différents moyens sont soumis à des contraintes de placement dans les véhicules automobiles.

On notera en outre que la taille du spot formé par le faisceau sur la cible en l'absence de balayage détermine la résolution des images projetées et est contrainte par la fonction du dispositif. La plus grande dimension du spot doit être inférieure à 4% par exemple de la focale du système de projection, voire de l'ordre de 1% de la focale, et même moins de 0,5% de la focale dans certains cas.

Pour pallier ce problème, une première solution consiste à utiliser une source laser à semi-conducteur, telle une diode laser, qui occupe généralement moins d'espace qu'un laser conventionnel, et un système de balayage formé par un ou des micro-miroirs, plus communément désignés par l'acronyme MEMS pour le terme anglo-saxon MicroElectroMechanical System. L'intensité du faisceau lumineux émis par une diode laser est certes moindre par rapport à celui émis par un laser conventionnel de même puissance, néanmoins elle reste tout à fait satisfaisante. En pratique, la diode laser présente une facette de sortie du faisceau lumineux de forme générale rectangulaire et émet un faisceau lumineux selon un ou plusieurs modes de propagation. Les faisceaux laser de type multimodes ne sont pas « gaussiens », c'est-à-dire qu'ils engendrent un faisceau qui ne peut pas être modélisé par une distribution gaussienne unique. Ces lasers doivent être modélisés par une source surfacique de forme sensiblement rectangulaire située au « waist » du faisceau avec un premier axe selon lequel la source est étroite et un deuxième axe selon lequel la source est plus large. De plus, selon le premier axe, qui est dit « rapide », le faisceau diverge plus fortement que selon le deuxième axe, qui est dit « lent». Autrement dit, le comportement du faisceau laser en champ proche et en champ lointain, n'est pas le même dans les deux directions. Ainsi, la largeur du faisceau est plus grande dans la direction de l'axe lent que dans la direction de l'axe rapide au niveau de la source lumineuse.

On appelle « waist » la dimension minimale du faisceau en un point, le faisceau semblant divergé à partir dudit point. Le « waist » est aussi parfois appelé col.

Il est donc impossible de collimater simplement le faisceau sur le système de balayage avec une seule lentille de révolution classique lorsque cet organe est situé à une distance élevée du dispositif de collimation (supérieure notamment à 50mm), ce qui est en pratique le plus souvent le cas. En effet, si on utilise une lentille de petite focale, la taille de la facette de sortie de la source suivant sa grande dimension provoque une divergence inacceptable du faisceau conduisant à un spot lumineux trop grand sur le dispositif de conversion. Si on utilise une lentille de grande focale, la divergence du faisceau est faible, mais le grand axe du faisceau sur la surface de sortie de la lentille est alors trop grand par rapport à la taille du dispositif de balayage, en raison de la divergence importante du faisceau de la diode suivant son axe rapide (perpendiculaire au grand côté de la facette de sortie). Le faisceau « déborde » alors du MEMS. Une simple collimation n'est efficace qu'en imposant des contraintes géométriques souvent inacceptables sur les positions relatives de la diode laser, du dispositif de conversion et du système de balayage.

Une deuxième solution consiste à focaliser le faisceau sur la cible. Mais les contraintes géométriques évoquées ci-dessus conduisent de manière similaire à former une tache s'étendant au-delà du contour du système de balayage (sauf pour des positions relatives contraintes généralement inacceptables en pratique), si bien qu'il faut utiliser un diaphragme pour éviter d'éclairer inutilement des éléments environnant ledit système. Cela engendre une baisse importante du rendement lumineux du dispositif, ce qui n'est pas acceptable.

Un but de l'invention est de résoudre au moins un des inconvénients de l'art antérieur en fournissant un module capable de former un spot lumineux de forme et de taille prédéterminées sur un élément de conversion à partir d'un faisceau lumineux émis par une source laser à semi-conducteur, la position relative de ladite source par rapport au système de balayage et à l'élément de conversion étant déterminée, et ce avec des moyens simples.

A cet effet, on prévoit selon l'invention un module lumineux, notamment d'éclairage et/ou de signalisation de véhicule automobile, comprenant au moins une source lumineuse apte à générer un faisceau lumineux suivant un axe optique, ledit faisceau présentant un axe lent de divergence et un axe rapide de divergence, ces trois axes étant perpendiculaires deux à deux, au moins un élément de conversion de lumière, au moins un système de balayage agencé pour balayer la surface dudit élément de conversion avec le faisceau lumineux, une optique de focalisation agencée entre la source lumineuse et le système de balayage pour focaliser le faisceau lumineux sur l'élément de conversion de lumière en adaptant la taille et la forme dudit faisceau aux dimensions dudit système de balayage, l'optique de focalisation formant objectif avec un grandissement différent selon un plan contenant ledit axe optique et ledit axe lent et selon un plan contenant l'axe optique et l'axe rapide.

De préférence, le grandissement est plus grand selon le plan contenant l'axe optique et l'axe rapide que suivant le plan contenant l'axe optique et l'axe lent.

Un élément de conversion de lumière comprend au moins un matériau luminescent conçu pour absorber au moins une partie d'au moins une lumière d'excitation émise par une source lumineuse et pour convertir au moins une partie de ladite lumière d'excitation absorbée en une lumière d'émission ayant une longueur d'onde différente de celle de la lumière d'excitation.

Ainsi, l'optique de focalisation formant objectif de projection dans le plan contenant les axes optique et lent avec un grandissement faible, permet de focaliser simplement la source de grande étendue dans ce premier plan sur le dispositif de conversion. Compte tenu de la faible divergence du faisceau suivant l'axe lent, ceci permet d'assurer sur le dernier dioptre du système optique une dimension de faisceau voisine de la taille de l'organe de balayage dans le plan considéré. De la sorte, le faisceau convergeant vers le spot (image, de plus petite dimension) situé sur l'élément de conversion de l'image passe en plus grande partie au moins sur le système de balayage situé entre l'optique de focalisation et l'élément de conversion de la lumière.

L'optique de focalisation formant objectif dans le plan contenant les axes optique et rapide avec un grandissement important, permet de mettre en forme le faisceau fortement divergent dans ce plan pour que la dimension dans ce plan de la tache lumineuse formée soit contenue dans le système de balayage, tout en ayant une dimension la plus petite possible (inférieure ou égale à la taille maximale du spot pour l'application) sur l'élément de conversion de lumière. Il en résulte que l'optique de focalisation est anamorphique. On forme bien ainsi un spot lumineux de forme désirée sur l'élément de conversion de lumière, passant par un système de balayage de taille donnée à partir d'une diode laser, la position de la diode laser par rapport au système de balayage et à l'élément de conversion de lumière étant prédéterminée.

Avantageusement, l'optique de focalisation comprend au moins un premier dioptre et au moins un deuxième dioptre, le premier dioptre étant convergent et présentant une portion d'acylindre dont les génératrices sont parallèles à l'axe lent (Y). On entend par acylindre un cylindre à section non circulaire.

Avantageusement, la portion d'acylindre est à section sensiblement ellipsoïdale.

Cette forme de dioptre proche convient et est simple à fabriquer.

Avantageusement le dioptre le plus proche de la source lumineuse est le premier dioptre.

Avantageusement, le deuxième dioptre est convergent, le deuxième dioptre étant le plus éloigné de la source lumineuse.

Avantageusement, le deuxième dioptre présente sensiblement la forme d'une biconique.

Ainsi, le dioptre distant est également réalisé avec des moyens simples car sa forme de portion de biconique est aussi simple à réaliser industriellement.

Avantageusement, le premier dioptre et le deuxième dioptre sont formés respectivement par une surface d'entrée et une surface de sortie de lumière d'une lentille biconvexe.

De la sorte, la lentille formant l'optique de focalisation est réalisée dans un solide convexe. De tels solides sont plus simples à fabriquer industriellement que des solides concaves, et présentent des tolérances de fabrications moindres. On permet ainsi la fabrication simple et à bas coût des moyens optiques formant objectif et anamorphoseur.

Avantageusement, dans le plan contenant l'axe rapide et l'axe optique en identifiant les paramètres suivants :

- $\eta$ la hauteur du faisceau lumineux sur le dioptre distant,
- $D_m$ la distance séparant le centre de l'élément de conversion de lumière et le point d'intersection de l'axe optique avec le dioptre distant mesurée le long du chemin optique,
- $d_m$ la distance séparant le centre du système de balayge et le point d'intersection de l'axe optique avec le dioptre distant, et
- $R_m$ le rayon de la surface efficace du système de balayage,

ces paramètres vérifient l'inégalité suivante :

$$\eta \leq D_m \frac{R_m}{D_m - d_m}$$

Lorsque cette inégalité est vérifiée, l'agencement atteint le but d'obtenir un spot lumineux de taille souhaitée tout en respectant les contraintes de placement des différents éléments du module. Cette règle sera expliquée plus en détails plus bas.

Avantageusement, l'optique de focalisation est fabriquée au moins en partie dans un matériau choisi parmi le silicone, le polyméthacrylate de méthyle, les polyoléfines et un verre.

Ces matériaux sont performants pour transmettre un faisceau lumineux dont le spectre lumineux est inclus dans le domaine visible, notamment le bleu, le jaune, et/ou le rouge.

Avantageusement, la source lumineuse présente une facette de sortie du faisceau lumineux de forme générale rectangulaire, la longueur de chaque côté de cette facette de sortie étant au moins deux fois supérieure à la longueur d'onde du faisceau lumineux (F) émis par la source lumineuse à semi-conducteur, et la longueur du plus grand côté de cette facette étant au moins deux fois supérieure à celle du petit côté.

Avantageusement, la longueur d'onde du faisceau lumineux (F) émis par la source lumineuse est inférieure ou égale à 455 nm.

On permet ainsi que la longueur de chaque côté de la facette de sortie de la diode laser puisse être de l'ordre de 1 μm ou plus grande sans pour autant que les phénomènes de diffraction nuisibles soient trop importants.

Avantageusement, le système de balayage comprend au moins un micro-miroir, de préférence un micro-miroir plan.

On peut ainsi jouer sur la vitesse de balayage pour améliorer l'intensité lumineuse en certains points du faisceau lumineux en sortie de module. De surcroît, cela permet de réduire l'encombrement du module lumineux.

Avantageusement, l'élément de conversion de lumière comprend au moins un matériau luminescent.

On entend par matériau luminescent un matériau conçu pour absorber au moins une partie d'au moins une lumière d'excitation émise par une source lumineuse et pour convertir au moins une partie de ladite lumière d'excitation absorbée en une lumière d'émission ayant une longueur d'onde différente de celle de la lumière d'excitation.

Les matériaux luminescents pourront être choisi parmi :

- les matériaux luminescents jaune, comme $Y_3Al_5O_{12}$:$Ce^{3+}$ (YAG), $(Sr,Ba)_2SiO_4$:$Eu^{2+}$, $Ca_x(Si,Al)_{12}(O,N)_{16}$:$Eu^{2+}$ ou leur mélange, absorbe la lumière de couleur bleu pour réémettre une lumière de couleur jaune.
- les matériaux luminescents rouge, comme $CaAlSiN_3$:$Eu^{2+}$, $Ca_2Si_5N_8$:$Eu^{2+}$, $La_2O_2S$:$Eu3+$ absorbe la lumière UV (abréviation pour ultra-violet) pour réémettre une lumière de couleur rouge.

Avantageusement l'élément de conversion de lumière présente une forme parallépipédique.

On peut ainsi faciliter la mise au point de l'optique de focalisation. Cela permet en outre d'intégrer plus facilement l'élément de conversion de lumière dans des systèmes complexes.

Avantageusement, le matériau luminescent absorbe au plus une partie de la lumière d'excitation.

Ainsi, le mélange de la lumière d'excitation et de la lumière d'émission produit une troisième couleur par synthèse additive. Cette troisième couleur peut être du blanc si la lumière d'excitation est du bleu et que la lumière d'émission est du jaune. Avantageusement, l'élément de conversion de lumière peut fonctionner en transmission. On entend par fonctionner en transmission que la lumière d'excitation non absorbée par le matériau luminescent traversera l'élément de conversion de lumière dans le sens de propagation du faisceau lumineux.

Il est ainsi possible de réduire l'encombrement du module lumineux et de simplifier son montage.

Avantageusement, la source lumineuse est une source laser à semi-conducteur, de préférence une diode laser.

L'invention a aussi pour objet un dispositif lumineux, notamment d'éclairage et/ou de signalisation pour véhicule automobile, comprenant un boitier et une glace de fermeture du boitier dans lequel est logé au moins un module lumineux selon les caractéristiques énoncées plus haut et une optique de mise en forme de manière à réaliser une fonction d'éclairage et/de signalisation.

On entend par optique de mise en forme qu'au moins un des rayons émis par la source lumineuse est dévié par l'optique de mise en forme. On entend par dévié que la direction d'entrée du rayon lumineux dans l'optique de mise en forme est différente de la direction de sortie du rayon lumineux de l'optique de mise en forme. L'optique de mise en forme comprend au moins un élément optique tel qu'une ou plusieurs lentilles, un ou plusieurs réflecteurs, un ou plusieurs guides de lumière ou une combinaison de ces possibilités.

Avantageusement, la fonction d'éclairage et/ou de signalisation est une fonction photométrique réglementaire.

Une fonction photométrique sera par exemple une fonction d'éclairage et/ou de signalisation visible pour un oeil humain. Dans le domaine de l'automobile, cette fonction photométrique pourra se conformer à la réglementation en vigueur dans le pays où elle sera utilisée, elle sera alors qualifiée de réglementaire. Les fonctions photométriques réglementaires sont par exemple : le feu diurme (DRL), réglementation 087 UNECE, le feu de position, réglementation 007 UNECE, le feu de code, réglementation 112 UNECE, le feu de route, réglementations 98 et 112 UNECE, le feu de recul, réglementation 023 UNECE, le feu stop, réglementation 007 UNECE, l'indicateur de direction, réglementation 006 UNECE, le feu antibrouillard, réglementations 019 et 038 UNECE. La réglementation pourra contenir des exigences de colorimétrie, d'intensité, de répartition spatiale selon une grille dite photométrique ou encore de plages de visibilité de la lumière émise.

L'invention sera mieux comprise à la lecture de la description qui va suivre donnée uniquement à titre d'exemple et faite en référence aux dessins dans lesquels :

- la figure 1 est une vue schématique d'un module lumineux, notamment d'éclairage et/ou de signalisation pour véhicule automobile, selon l'invention,
- la figure 2 est un schéma illustrant l'agencement des composants du module lumineux de la figure 1 les uns par rapport aux autres,

- la figure 3 est une vue en perspective d'un dispositif optique selon l'invention, illustrant notamment sa surface d'entrée de lumière, et
- la figure 4 est une vue en perspective du dispositif optique de la figure 4, illustrant notamment sa surface de sortie de lumière.

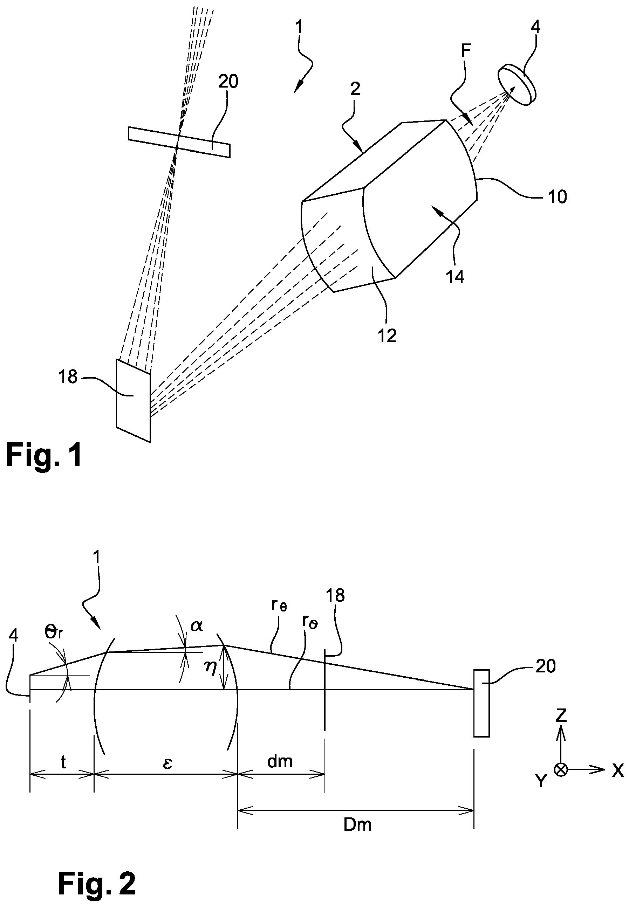

On a illustré en figure 1 un module lumineux 1, notamment d'éclairage et/ou de signalisation pour véhicule automobile, selon l'invention. Il comprend une optique de focalisation 2 selon l'invention placé au droit d'une source lumineuse 4. La source lumineuse est ici une diode laser. Cette diode laser 4 émet un faisceau lumineux F sensiblement monochromatique, à une longueur d'onde préférentiellement inférieure ou égale à 455 nm, par exemple de l'ordre de 448 nm de sorte qu'elle émette une lumière bleue. La diode laser 4 présente une facette de sortie du faisceau lumineux (non représentée pour des raisons de clarté des figures) de forme générale rectangulaire. La longueur de chaque côté de cette facette de sortie étant au moins deux fois supérieure à la longueur d'onde du faisceau lumineux F émis par la diode laser 4 et la longueur du plus grand côté de cette facette étant au moins deux fois supérieure à celle du petit côté.

La forme rectangulaire de la facette de sortie du faisceau lumineux de la diode laser 4 implique que la diode laser 4 émet le faisceau lumineux suivant un axe optique X, lequel faisceau lumineux diverge selon un axe lent Y, parallèle à la direction de la grande dimension de l'ouverture d'émission, et selon un axe rapide Z, parallèle à la direction de la petite dimension de l'ouverture d'émission. Les axes X, Y et Z sont perpendiculaires deux à deux. Ces axes sont représentés sur la figure 2.

L'optique de focalisation 2 forme à la fois objectif, dans le plan contenant les axes optique X et lent Y, et « anamorphoseur » dans le plan contenant les axes optique X et rapide Z, c'est-à-dire un grandissement différent dans ce plan. En d'autres termes le grandissement dans le plan contenant les axes optique X et rapide Z est différent du grandissement dans le plan contenant les axes optique X et lent Y.

L'optique de focalisation 2 comprend deux dioptres courbes de réfraction 10, 12 situés en aval de la diode laser 4 en considérant le sens de propagation du faisceau lumineux F. Le dioptre le plus proche de la diode laser, dit dioptre proche 10, est convergeant et présente sensiblement la forme d'une portion d'acylindre dont les génératrices sont parallèles à l'axe lent Y. Ici, l'acylindre est à section sensiblement ellipsoïdale, mais on pourrait prévoir d'utiliser une autre forme de section convenable. Le dioptre le plus éloigné de la diode laser, dit dioptre distant 12, est convergent et présente sensiblement la forme d'une biconique, c'est-à-dire une surface entièrement et uniquement décrite par sa courbure et sa conicité.

Les dioptres proche 10 et distant 12 sont respectivement formés par une surface d'entrée de lumière et une surface de sortie de lumière formant une lentille biconvexe 14. On peut prévoir d'utiliser un autre type de lentille qui convient, mais la lentille 14 présente l'avantage de présenter la forme d'un solide convexe. De tels solides sont faciles à réaliser industriellement et présentent des tolérances de fabrication plus faibles que des solides concaves.

A titre d'exemple de réalisation, la lentille 14, est fabriquée au moins en partie dans un matériau choisi parmi le silicone, le polyméthacrylate de méthyle et/o un verre. Ces matériaux présentent des coefficients d'absorption lumineuse faibles, ce qui permet de limiter la perte en énergie lumineuse due à l'absorption de la lumière lorsque le faisceau lumineux traverse la lentille 14.

Le module lumineux comprend en outre un système de balayage 18, illustré sur la figure 1. Le système de balayage permet de balayer la surface d'un élément de conversion de lumière 20 avec le faisceau lumineux F. L'élément de conversion de lumière 20 est placé sur le trajet optique du faisceau lumineux F, en aval du dispositif optique 2 en considérant le sens de propagation du faisceau lumineux F. Ce système de balayage 18 est formé par un ou plusieurs micro-miroirs, plus communément désignés par l'acronyme MEMS pour les termes anglo-saxons MicroElectroMechanical System. On pourra toutefois prévoir que le système de balayage 18 soit formé par un autre moyen de balayage. L'élément de conversion de lumière 20 est par exemple un corps comprenant au moins un matériau luminescent, par exemple des cristaux YAG (Yttrium Aluminium Garnet) dopés aux terres rares, du sulfure de zinc, etc. Un mode de réalisation préféré consiste en une couche de liant polymère chargée en YAG déposée en couche mince en surface d'une lame métallique réfléchissante plan (placée au plan image de l'objectif).

L'élément de conversion de lumière permet de transformer le faisceau lumineux F sensiblement monochromatique en lumière blanche. C'est cette lumière blanche qui est destinée à éclairer la route devant le véhicule. La forme du spot lumineux formée par la lumière blanche est directement liée à la forme du spot formé par le faisceau lumineux F sur l'élément de conversion de lumière 20. C'est la raison pour laquelle il est important de maîtriser la forme du spot lumineux formé sur l'élément de conversion de lumière 20. De préférence, ce spot lumineux sur l'élément de conversion de lumière est de forme générale rectangulaire, pour que le spot lumineux en lumière blanche soit lui aussi rectangulaire, mais on peut prévoir une toute autre forme de spot lumineux.

Pour obtenir une lumière de couleur blanche, le faisceau lumineux F émis par la source lumineuse peut être de couleur bleue. Une partie de ce faisceau lumineux F, aussi appelé lumière d'excitation, sera absorbé par le matériau luminescent convenablement choisi et contenu dans l'élément de conversion de lumière 20. Le matériau luminescent émettra alors une lumière d'émission de couleur jaune, qui par synthèse additive avec la lumière d'excitation non absorbée par le matériau luminescent donnera une lumière de couleur blanche. Le matériau luminescent pourra être par exemple du $Y_3Al_5O_{12}:Ce^{3+}$ (YAG), ou $(Sr,Ba)_2SiO_4:Eu^{2+}$, ou $Ca_x(Si,Al)_{12}(O,N)_{16}:Eu^{2+}$ ou autre.

On va maintenant décrire une manière d'agencer les éléments du module lumineux 1 les uns par rapport aux autres de sorte que l'optique de focalisation 2 soit agencée pour former le spot lumineux de forme prédéterminé sur l'élément de conversion de lumière 20.

Dans les raisonnements qui suivent, on considère que le système de balayage 18 est retiré de la trajectoire du faisceau lumineux F, et que l'élément de conversion 20 est déplacé de sorte qu'il soit confondu avec l'image de l'élément de conversion par une rotation autour du centre du système de balayage 18 déplaçant le centre de l'élément de conversion 20 sur l'axe optique X. On dit alors que l'on a « déplié » le faisceau lumineux, puisqu'on considère ainsi qu'il suit une trajectoire sensiblement rectiligne. Cela permet de simplifier considérablement les calculs, sans pour autant les rendre erronés.

On note sur la figure 2 $r_o$ le rayon lumineux du faisceau lumineux F émis par la diode laser 4 sensiblement confondu à l'axe optique X. On note $r_e$ le rayon lumineux du faisceau lumineux F, sensiblement contenu dans le plan contenant les axes optique X et rapide Z, le plus dévié par rapport à l'axe optique X en sortie de la facette de sortie de la diode laser 4.

On identifie également les paramètres suivants sur la figure 2 :

- $\theta_r$ est l'angle mesuré entre le rayon $r_e$ et l'axe optique X. Il s'agit de la demi-ouverture, dans le plan contenant les axes optique X et rapide Z, du faisceau lumineux F émis à la sortie de la diode laser 20.
- $\alpha$ est la divergence résiduelle du faisceau lumineux F derrière le dioptre proche 10, mesuré par rapport à l'axe optique X. $\alpha$ est en général nul ou bien de l'ordre de quelques degrés.
- t est la distance séparant la facette de sortie de lumière de la diode laser 4 (ou la face la plus proche de la lentille de la fenêtre de protection du laser si une telle fenêtre est présente) et le point d'intersection de l'axe optique X avec le dioptre proche 10. t est communément appelé le tirage.
- $\varepsilon$ est l'épaisseur de la lentille 14. En d'autres termes, il s'agit de la distance séparant l'intersection de l'axe optique X avec le dioptre proche 10 et l'intersection de l'axe optique X avec le dioptre distant 12.
- $D_m$ est la distance séparant le centre de l'élément de conversion de lumière 20 et le point d'intersection de l'axe optique X avec le dioptre distant 12,
- $d_m$ est la distance séparant le centre du système de balayage 18 et le point d'intersection de l'axe optique X avec le dioptre distant 12, et
- $R_m$ est le rayon de la surface efficace du système de balayage 18. Il s'agit de la surface du système de balayage 18 qui est effectivement apte à balayer le faisceau lumineux F. On considère ici qu'elle est circulaire, mais on peut prévoir qu'elle présente une toute autre forme.
- $\eta$ est la hauteur du faisceau lumineux F sur le dioptre distant 12. Il s'agit de la distance séparant le point d'intersection du rayon $r_e$ avec le dioptre distant 12 et le point d'intersection du rayon $r_o$ avec le dioptre distant 12. $\eta$ est une fonction de t, $\varepsilon$, $\theta_r$ et $\alpha$.

Les paramètres t, $\varepsilon$, $D_m$, $d_m$ et $R_m$ sont des paramètres géométriques rendant compte de la position relative des différents éléments du module lumineux 1 les uns par rapport aux autres. Ces paramètres doivent respecter les contraintes d'encombrement auxquels sont soumis les éléments du module lumineux 1. Mais il est intéressant d'optimiser ces paramètres géométriques, de sorte que l'inégalité suivante soit respectée :

$$\eta \leq D_m \frac{R_m}{D_m - d_m}$$

De la sorte, $\eta$ est suffisamment petit pour qu'il soit possible de focaliser le faisceau lumineux F sur la surface efficace du système de balayage 18 et sur l'élément de conversion de lumière 20 pour obtenir le spot lumineux souhaité.

Pour respecter cette inégalité, une solution est de rendre le tirage t aussi petit que possible. On comprend que de la sorte, la lentille 14 est placée à proximité de la facette de sortie de lumière de la diode laser 4. La lentille 14 est ainsi apte à faire converger le faisceau lumineux F, fortement divergent dans le plan contenant les axes optique X et rapide Z, avant que celui-ci n'ait trop divergé. En revanche, il est en pratique impossible de rendre le tirage t aussi petit qu'on le souhaite, car le tirage possède une borne inférieure du fait de contraintes mécaniques, telle que l'épaisseur d'une glace de protection qui couvre la facette de sortie de la diode laser 4 par exemple.

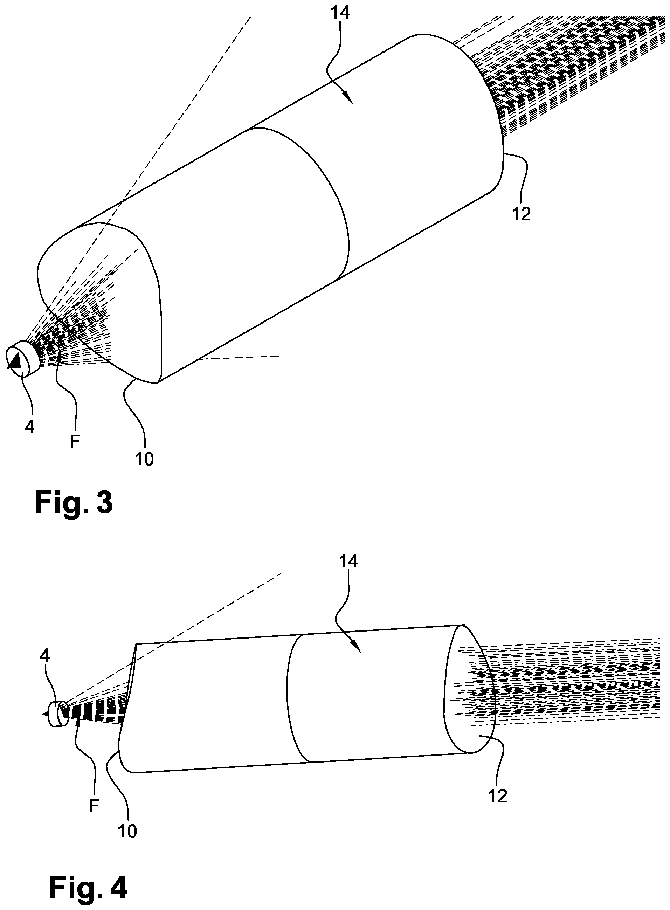

Les figures 3 et 4 illustrent l'élément de focalisation 2 agencé de manière à ce que l'inégalité énoncée plus haut soit respectée. On remarque que la lentille 14 est placée à faible distance de la diode laser 4. On remarque également que la lentille 14 présente une épaisseur relativement importante. Cette épaisseur est environ trois à quatre fois supérieure à la distance séparant la diode laser 4 et la lentille 14. L'importance de cette épaisseur est expliquée par le grandissement requis par le dispositif optique dans le plan contenant l'axe optique et l'axe lent pour obtenir le spot lumineux de forme souhaitée sur la cible 20.

On va maintenant détailler des calculs permettant de réaliser la lentille, et notamment les dioptres proche et distant.

On considère dans le plan XZ un rayon issu du centre de la facette de sortie du laser faisant un angle $\alpha$ avec l'axe X ; on nomme $\beta$ l'angle avec l'horizontale de ce rayon réfracté dans la lame de verre de protection du laser (d'épaisseur $e_l$, en verre d'indice $n_l$ à la longueur d'onde du laser, perpendiculaire à X et située à une distance $\delta$ de la facette de sortie du laser) et on nomme ($x, z$) les coordonnées du point de la coupe de la surface d'entrée de la lentille par le plan XZ (c'est une section droite de l'acylindre) atteint par le rayon considéré.

On détermine ($x, z$) en écrivant la constance du chemin optique du point source à un plan hypothétique situé à une distance R du sommet de la coupe de l'acylindre, perpendiculaire à X, situé à l'intérieur de la lentille. Conformément au théorème de Fermat cela revient à écrire que la face d'entrée de la lentille collimate le faisceau lumineux parallèlement à X à l'intérieur de la lentille).

On note n l'indice de réfraction du matériau de la lentille et $n_l$ l'indice de la lame de protection entre le laser et la lentille.

Alors,

$$\frac{\delta}{\cos\alpha} + n_l\frac{e_l}{\cos\beta} + \sqrt{(x-\delta-e_l)^2 + (z-\delta\tan\alpha-e_l\tan\beta)^2} + n(\delta+e_l+t+R-x) = $$
$$\delta + n_l e_l + t + nR \qquad (1)$$

où R s'élimine.

Par ailleurs, le rayon émergeant de la lame de protection en faisant un angle $\alpha$ avec l'horizontale (lame plane à face parallèles),

$$\frac{z-\delta\tan\alpha-e_l\tan\beta}{x-\delta-e_l} = \tan\alpha \qquad (2)$$

On tire z de (2) et on substitue son expression dans (1). On isole la racine carrée de (1) d'un coté de l'équation, qu'on élève alors au carré. On obtient ainsi, après simplification, une équation du second degré en $x$ en fonction des paramètres et donc $x$ en fonction de $\alpha$ (puisque $\beta = \mathrm{asin}\left(\frac{\sin\alpha}{n_l}\right)$).

De (2) on tire $z(\alpha)$ et ($x(\alpha), z(\alpha)$) est une équation paramétrique de la section droite de l'acylindre constituant la face d'entrée de la lentille.

On calcule ensuite la coupe de la face de sortie de la lentille par le plan XZ en écrivant la constance du chemin optique du point source situé au centre de la facette de sortie du laser à l'intersection de l'axe X avec la lame de matériau de conversion (calcul en mode « déplié »).

Soit C le point d'intersection de X et du plan du matériau de conversion.

$$C = \begin{pmatrix} c \\ 0 \\ 0 \end{pmatrix}, c = \delta + e_l + t + \varepsilon + D_m$$

Soit M le point d'émergence du rayon considéré (intersection du rayon avec la face distante de la lentille),

$$M = \begin{pmatrix} x_M \\ 0 \\ z_M \end{pmatrix} = \begin{pmatrix} x_M \\ 0 \\ z \end{pmatrix}$$

puisque le rayon est parallèle à X dans la lentille. On pose $x_M = x + \mu(\alpha)$ et on détermine m (longueur du trajet du rayon à l'intérieur de la lentille) :

$$\frac{\delta}{\cos\alpha} + n_l \frac{e_l}{\cos\beta} + \frac{x-(\delta+e_l)}{\cos\alpha} + n\mu + MC = \delta + n_l e_l + t + n\varepsilon + D_m \qquad (3)$$

n étant l''indice du matériau de la lentille.

Or

$$MC^2 = \left(c - (x+\mu)\right)^2 + z^2 \qquad (4)$$

donc en isolant *MC* d'un côté de l'équation (3) puis en élevant cette équation au carré et en replaçant *MC*$^2$ par son expression dans (4) on obtient une équation du second degré en $\mu$, d'où on tire $\mu(\alpha)$, $x(\alpha)$ et $z(\alpha)$ ayant été établis précédemment.

On en déduit $x_M(\alpha)$ et $z_M(\alpha)$, en fonction des paramètres du système et notamment de t et de $\varepsilon$.

Par ailleurs on peut calculer $\varepsilon$ en fonction du rapport g de la taille du spot souhaitée à la taille de la facette de sortie du laser suivant l'axe lent (grand côté) grâce à une construction en optique paraxiale dans le plan XY.

Dans ce plan la face d'entrée de la lentille se réduit à un segment de droite situé à une distance t de la lame de protection du laser.

On construit un rayon d'angle d'incidence $\aleph$ sur la lame de protection du laser, passant par le sommet de la lentille (point d'intersection de la face de sortie de la lentille et de l'axe X, point où la normale à la surface est parallèle X, ce qui permet le calcul du rayon tout en ignorant à ce stade la forme réelle de la face de sortie) et on détermine ses intersections avec le plan de la facette de sortie du laser et celui du matériau de conversion. Le rapport des distances de ces intersections à l'axe X est un grandissement, égal au grandissement paraxial lorsque $\aleph \to 0$.

On trouve alors que :

$$\varepsilon = \frac{nD_m}{g} - n(t+\delta) - \frac{ne_l}{n_l}$$

qui est fonction de t.

Comme $\eta = z_M(\theta_r)$, fonction de t et de $\varepsilon$, on en déduit t (par résolution numérique) en écrivant que

$$\eta = D_m \frac{R_m}{D_m - d_m}$$

Il reste alors à calculer la surface de sortie de la lentille en 3 dimensions.

On considère un rayon issu du centre de la facette de sortie du laser, de direction $\vec{\imath}$

$$\vec{\imath} = \begin{pmatrix} \cos\varphi\cos\theta \\ \cos\varphi\sin\theta \\ \sin\varphi \end{pmatrix}$$

dans le repère XYZ du calcul

Qu'on propage facilement à travers la lame de protection (Descartes) et dont on trouve (numériquement) l'intersection P avec la face d'entrée de la lentille (cylindre calculé précédemment) puis la direction $\vec{r}$ dans la lentille une fois réfracté par cette face. On nomme k le chemin optique parcouru par le rayon du centre de la facette de sortie du laser au point P.

Soit M le point d'émergence du rayon sur la face de sortie de la lentille, on pose

$$\overrightarrow{PM} = \rho \vec{r} \qquad\qquad (5)$$

On écrit ensuite la constance du chemin optique du centre de la facette de sortie du laser au point C :

$$k + n\rho + MC = \delta + n_l e_l + t + n\varepsilon + D_m$$

D'où

$$MC^2 = (\delta + n_l e_l + t + n\varepsilon + D_m - k - n\rho)^2 \qquad\qquad (6)$$

or

$$MC^2 = \overrightarrow{MC} \cdot \overrightarrow{MC} = \left(\overrightarrow{PC} - \overrightarrow{PM}\right) \cdot \left(\overrightarrow{PC} - \overrightarrow{PM}\right) = \left(\overrightarrow{PC} - \rho\vec{r}\right) \cdot \left(\overrightarrow{PC} - \rho\vec{r}\right) = PC^2 + \rho^2 - 2\rho\left(\overrightarrow{PC} \cdot \vec{r}\right)$$

D'où

$$PC^2 + \rho^2 - 2\rho\left(\overrightarrow{PC} \cdot \vec{r}\right) = (\delta + n_l e_l + t + n\varepsilon + D_m - k - n\rho)^2 \qquad (7)$$

Donc (7) est une équation du second degré en $\rho$, d'où on tire $\rho(\varphi,\theta)$, puis $M(\varphi,\theta)$ en fonction des grandeurs caractéristiques du système, les termes $\overrightarrow{PC}$, $\vec{r}$, $k$ ayant été préalablement calculés. On obtient ainsi une équation paramétrique de la surface recherchée.

Bien entendu, on pourra apporter à l'invention de nombreuses modifications sans sortir du cadre de celle-ci.

La lentille peut comprendre d'autres matériaux que ceux décrits plus haut.

La diode laser peut émettre un faisceau lumineux de longueur d'onde différente de celle donnée à titre d'exemple plus haut.

**Revendications**

1. Module lumineux (1), notamment d'éclairage et/ou de signalisation pour véhicule automobile, comprenant :

   - au moins une source lumineuse (4) apte à générer un faisceau lumineux (F) suivant un axe optique (X), ledit faisceau lumineux présentant un axe lent (Y) de divergence et un axe rapide (Z) de divergence, ces trois axes étant perpendiculaires deux à deux,
   - au moins un élément de conversion de lumière (20),
   - au moins un système de balayage (18) agencé pour balayer la surface dudit élément de conversion de lumière (20) avec le faisceau lumineux (F),
   - une optique de focalisation (2) agencée entre la source lumineuse et le système de balayage (18) pour focaliser le faisceau lumineux sur l'élément de conversion (20) en adaptant la taille et la forme dudit faisceau lumineux aux dimensions dudit système de balayage,

   l'optique de focalisation formant objectif avec un grandissement différent selon un plan contenant ledit axe optique et ledit axe lent et selon un plan contenant l'axe optique et l'axe rapide.

2. Module lumineux (1) selon la revendication 1, dans lequel le grandissement est plus grand selon le plan contenant l'axe optique et l'axe rapide que suivant le plan contenant l'axe optique et l'axe lent.

3. Module lumineux (1) selon la revendication 1 ou 2, dans lequel l'optique de focalisation (2) comprend au moins un premier dioptre (10) et au moins un deuxième dioptre (12), le premier dioptre (10) étant convergent et présentant une portion d'acylindre dont les génératrices sont parallèles à l'axe lent (Y).

4.  Module lumineux (2) selon la revendication précédente, dans lequel la portion d'acylindre est à section sensiblement ellipsoïdale.

5.  Module lumineux selon la revendication 3 ou 4, dans lequel le dioptre le plus proche de la source lumineuse (4) est le premier dioptre (10).

6.  Module lumineux selon l'une des revendications 3 à 5, dans lequel le deuxième dioptre (12) est convergent, le deuxième dioptre (12) étant le plus éloigné de la source lumineuse (4)

7.  Module lumineux selon l'une des revendications 3 à 6, dans lequel le deuxième dioptre (12) présente sensiblement la forme d'une biconique.

8.  Module lumineux (2) selon l'une quelconque des revendications 3 à 7, dans lequel le premier dioptre (10) et le deuxième dioptre (12) sont formés respectivement par une surface d'entrée et une surface de sortie de lumière d'une lentille biconvexe (14).

9.  Module lumineux (2) selon l'une quelconque des revendications précédentes, dans lequel l'optique de focalisation est fabriquée au moins en partie dans un matériau choisi parmi le silicone, le polyméthacrylate de méthyle, les polyoléfines et un verre.

10. Module lumineux (2) selon l'une quelconque des revendications précédentes, dans lequel la source lumineuse (4) présente une facette de sortie du faisceau lumineux de forme générale rectangulaire, la longueur de chaque côté de cette facette de sortie étant au moins deux fois supérieure à la longueur d'onde du faisceau lumineux (F) émis par la source lumineuse (4), et la longueur du plus grand côté de cette facette étant au moins deux fois supérieure à celle du petit côté.

11. Module lumineux (2) selon l'une quelconque des revendications précédentes, dans lequel la longueur d'onde du faisceau lumineux (F) émis par la source lumineuse (4) est inférieure ou égale à 455 nm.

12. Module lumineux (2) selon l'une quelconque des revendications précédentes, dans lequel le système de balayage (18) comprend au moins un micro-miroir, de préférence un micro-miroir plan.

13. Module lumineux selon l'une quelconque des revendications précédentes, dans lequel l'élément de conversion de lumière (20) comprend au moins un matériau luminescent.

14. Dispositif lumineux, notamment d'éclairage et/ou de signalisation pour véhicule automobile, comprenant un boitier et une glace de fermeture dudit boitier dans lequel est logé au moins un module lumineux selon l'une quelconque des revendications précédentes et une optique de mise en forme de manière à réaliser une fonction d'éclairage et/de signalisation.

15. Dispositif lumineux selon la revendication précédente, dans lequel la fonction d'éclairage et/ou de signalisation est une fonction d'éclairage et/ou de signalisation réglementaire.

**Fig. 1**

**Fig. 2**

14

12

4

F

10

**Fig. 3**

14

4

F

10

12

**Fig. 4**

Europäisches
Patentamt

European
Patent Office

Office européen
des brevets

**RAPPORT DE RECHERCHE EUROPEENNE**

Numéro de la demande

EP 17 15 1482

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (IPC) |
| X<br>Y | EP 2 963 476 A1 (VALEO VISION [FR])<br>6 janvier 2016 (2016-01-06)<br>* alinéas [0009] - [0011], [0020],<br>[0022], [0023]; revendications 1,10 *<br>----- | 1,2,9-15<br><br>3-8 | INV.<br>G02B27/09<br>F21S8/10 |
| Y | EP 2 561 996 A2 (PALO ALTO RES CT INC<br>[US]) 27 février 2013 (2013-02-27)<br>* alinéa [0038] *<br>----- | 3-8 | |
| A | EP 1 983 253 A2 (HELLA KGAA HUECK & CO<br>[DE]) 22 octobre 2008 (2008-10-22)<br>* alinéa [0017] *<br>----- | 1 | |
| A | EP 0 911 666 A2 (TEXAS INSTRUMENTS INC<br>[US]) 28 avril 1999 (1999-04-28)<br>* alinéas [0010], [0011] *<br>----- | 1 | |
| | | | DOMAINES TECHNIQUES RECHERCHES (IPC)<br><br>G02B<br>F21S |

Le présent rapport a été établi pour toutes les revendications

| Lieu de la recherche | Date d'achèvement de la recherche | Examinateur |
|---|---|---|
| Munich | 30 juin 2017 | Mollenhauer, Ralf |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 15 1482

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-06-2017

| Document brevet cité au rapport de recherche | | Date de publication | Membre(s) de la famille de brevet(s) | | Date de publication |
|---|---|---|---|---|---|
| EP 2963476 | A1 | 06-01-2016 | EP | 2963476 A1 | 06-01-2016 |
| | | | FR | 3023013 A1 | 01-01-2016 |
| EP 2561996 | A2 | 27-02-2013 | EP | 2561996 A2 | 27-02-2013 |
| | | | JP | 2013045109 A | 04-03-2013 |
| | | | US | 2013050391 A1 | 28-02-2013 |
| EP 1983253 | A2 | 22-10-2008 | AT | 532004 T | 15-11-2011 |
| | | | DE | 102007018988 A1 | 23-10-2008 |
| | | | EP | 1983253 A2 | 22-10-2008 |
| EP 0911666 | A2 | 28-04-1999 | EP | 0911666 A2 | 28-04-1999 |
| | | | US | 5930050 A | 27-07-1999 |

EPO FORM P0460

Pour tout renseignement concernant cette annexe : voir Journal Officiel de l'Office européen des brevets, No.12/82